Europäisches Patentamt

European Patent Office

Office européen des brevets

(19)

(11) Veröffentlichungsnummer: **0 166 267**
**B1**

(12) **EUROPÄISCHE PATENTSCHRIFT**

(45) Veröffentlichungstag der Patentschrifft:
28.02.90

(21) Anmeldenummer: 85106777.7

(22) Anmeldetag: 01.06.85

(51) Int. Cl. $^5$: **F 16 F 15/02, F 16 F 9/52**

(54) Viskoser Dämpfer mit konischem Stempelrohr.

(30) Priorität: 27.06.84 DE 3424338

(43) Veröffentlichungstag der Anmeldung:
02.01.86 Patentblatt 86/01

(45) Bekanntmachung des Hinweises auf die Patenterteilung:
28.02.90 Patentblatt 90/09

(84) Bennante Vertragsstaaten:
AT BE CH DE FR GB IT LI LU NL SE

(56) Entgegenhaltungen:
DE-A-2 844 424
DE-A-3 010 520
GB-A-472 718
SU-A-175 357
SU-A-1 006 824
US-A-2 359 917
US-A-2 439 349
US-A-2 597 800
US-A-2 881 870

PATENTS ABSTRACTS OF JAPAN, Band 6, Nr. 224 (M-170) 1102 , 9. November 1982; & JP-A-57 127 141 (SANWA TETSUKI K.K.) 07-08-1982

(73) Patentinhaber: GERB Gesellschaft für Isolierung mbH & Co. KG
Roedernallee 174-176
D-1000 Berlin 51 (DE)

(72) Erfinder: Weber, Frank-Michael, Dipl.-Phys.
Luitpoldstrasse 45
D-1000 Berlin 30 (DE)

(74) Vertreter: Scholz, Hartmut, Dipl.-Ing.
Bundesallee 74
D-1000 Berlin 41 (Friedenau) (DE)

## Beschreibung

Die Erfindung betrifft einen Schwingungsdämpfer für elastisch aufgestellte Objekte, mit einem zumindest teilweise mit einem viskosen Dämpfermedium gefüllten, in Einbaulage oben offenen Dämpfergehäuse, mit einem in Einbaulage unten offenen, durchgehend konisch ausgebildeten, hohlen Stempelrohr, das in dem Dämpfermedium auf- und abfahrbar ist und mit einer, mit dem Stempelrohr verbundenen Oberplatte zur Aufnahme des Objekts, wobei das Stempelrohr mit seinem kleinen Durchmesser mit der Oberplatte verbunden und mit seinem großen Durchmesser in das Dämpfermedium eingetaucht ist.

Aus der US-A-2 359 917 ist ein derartiges Schwingungsdämpfer zum Abfangen einzelner, schockartiger Stöße, beispielsweise Detonationen von Wasserbomben, bekannt, bei dem in einem geschlossenen, mit Asphalt gefüllten Gehäuse zwei mittels einer Rohrbuchse hintereinander geschaltete Federn ineinander angeordnet sind. Dabei wird eine Feder innen und die andere Feder außen von der Rohrbuchse geführt. Die Rohrbuchse ist konisch ausgebildet, um den Asphalt zu komprimieren und ein Ausfließen zu verhindern

Ähnliche Schwingungsdämpfer, wie sie beispielsweise aus der US-A-2 597 800 bekannt sind, entziehen bewegungsfähigen, insbesondere schwingungsfähigen Systemen kinetische Energie Sie werden in Verbindung mit Elastizitäten zur aktiven und passiven Schwingungsisolierung und zur Begrenzung von Stoß-Antwort-Wegen bei Maschinen, Maschinenfundamenten, an Rohrleitungen und dgl. eingesetzt. Mit dem aus der genannten Druckschrift bekannten Dampfer werden in Druck- und in Zugrichtung der Schwingungsbewegung gleiche Dämpfungskräfte erreicht.

Bei derartigen Dämpfern werden die Dämpfungskräfte durch Scherung und Verdrängung bei der Relativbewegung von Dämpferstempel und Dämpfermedium erzeugt. Der dabei auftretende Dampfungswiderstand hängt von der Dämpfergeometrie und den Eigenschaften des visko-elastischen Dämpfermediums ab. Die bei der Dämpfung dem zu dämpfenden, schwingungsfähigen System entzogene kinetische Energie wird in Warmeenergie umgewandelt und das Dämpfermedium damit erwärmt. Dadurch verändert sich dessen Viskosität, in der Regel wird die Viskosität verringert und der Dämpfungswiderstand damit vermindert.

Aus der SU-A 1 006 824 ist ein Schockabsorber bekannt, bei dem in einem fluidgefüllten, geschlossen Gehäuse mehrere Tellerfedern in topfartigen Klöppelböden angeordnet sind. Die Klöppelboden sind teleskopartig ineinander fahrbar und weisen an ihren vertikal verlaufenden Seitenwänden Öffnungen auf, durch die das Fluid beim Einfedern ausströmen und beim Ausfedern einströmen kann. Durch dieses Ein- und Ausströmen entsteht in den Öffnungen eine Drosselwirkung. Außerdem werden die Querschnitte der Öffnungen beim Einfedern kleiner und schließlich ganz Null, so daß eine Progressivität entsteht die durch die Inkompressibilität des Fluids schließlich begrenzt wird.

Zur aktiven und passiven Schwingungsisolierung von Kraft- und Arbeitsmaschinen sind die Dämpfer nach der US-A-2 359 917 uns der SU-A-1 006 824 nicht geeignet, da hier im Mehrschichtbetrieb hintereinander weg eine Vielzahl von Schwingungen gedämpft werden müssen und das Maschinenfundament jedesmal zurück in Ausgangslage gebracht werden muß. Dazu werden viskose Dämpfer entweder neben oder als Teil von die Lagerelastizität bewirkenden Federkörpern eingesetzt. Die Größe der zur Begrenzung der Schwingungsantwort erforderliche Dämpfungskraft ist von der Lagerungselastizität und der Form des Kraftanregungssignals abhängig. Schmiedehämmer und -pressen beispielsweise erzeugen Kraftanregungssignale, die in Richtung der Maschinenlagerung wirken.

Derartige Umformmaschinen können zur Aktivisolierung beispielsweise auf einem federnd gedämpft gelagerten Fundament oder bei ausreichender Maschinenmasse direkt auf dem Federkörper und Dämpfer aufgestellt werden. Dabei kann es bei ungünstigen Umformgrößen zu Wegamplituden kommen, die größer als vorausberechnet sind. Das Stempelrohr pumpt dabei quasi das Dampfermedium aus dem Dämpfergehäuse und der Dämpfer wird überbeansprucht, was sich als Zusammenbrechen der Scherkräfte in der Grenzschicht zwischen Dämpferstempel und Dämpfermedium bemerkbar macht; die Dampfungskraft geht dabei gegen Null.

Aufgabe der vorliegenden Erfindung ist es, einen viskosen Schwingungsdämpfer der eingangs beschriebenen Art zu schaffen, der in Stoßrichtung eine große Dämpfungskraft entwickelt, ein Auspumpen des Dämpfergehäuses vermeidet und der mit relativ großen Schwingbewegungen belastet werden kann.

Gelöst wird diese Aufgabe dadurch, daß das Innere des Stempelrohrs durch ein Abschlußblech in zwei Kammern unterteilt ist, daß in dem untenliegenden großen Durchmesser des Stempelrohrs eine mit Durchtrittsöffnungen versehene Prallplatte angeordnet ist, die eine Mehrzahl von in das Stempelrohr hineinragenden Innenrohren trägt, wobei die oberen Enden der Innenrohre einen Abstand zum Abschlußblech aufweisen und das Stempelrohr in seiner unterhalb des Abschlußbleches liegenden Mantelfläche eine Vielzahl von Umlaufbohrungen aufweist.

Durch diese Maßnahmen wird ein Schwingungsdämpfer geschaffen, der bei der Eintauchbewegung des Dämpferstempels in das Dämpfermedium, dh. in Stoßrichtung, zusätzlich zu der bekannten Scherkomponente auch eine Druckkomponente aufweist. Das Dämpfergehäuse ist in Einbaulage oben offen, damit der Dämpferstempel vertikale und horizontale Bewegungen aufnehmen und dämpfen kann. Durch die Umlaufbohrungen wird das Dämpfermedium in eine Strömungsrichtung bewegt, und zwar aus dem konischen Stempelhohlraum seitlich hinaus in den das Stempelrohr umgebenden Ringraum. Dadurch wird ein Auspumpen des Dämpfermediums aus dem oben offenen Dämpfergehäuse wirksam vermieden. Optimale Dämpfungswiderstände werden dabei im Bereich von 50 - 70 Grad, vorzugsweise von 60 Grad erreicht. Der Konus kann als Kegel- oder als Pyramidenstumpf ausgebildet sein.

Weitere vorteilhafte Maßnahmen sind in den Unteransprüchen beschrieben. Die Erfindung ist in der beiliegenden Zeichnung dargestellt und wird nachfolgend näher beschrieben; es zeigt:

Fig. 1 den senkrechten Schnitt durch einen schematisch dargestellten viskosen Dämpfer mit konischem Stempelrohr, mit Abschlußblech und Innenrohren;

Fig. 2 den Schnitt durch einen viskosen Dämpfer mit konischem Stempelrohr nach der Fig 2, mit einer zentrischen, durchgehenden Abstützung;

Fig. 3 den senkrechten Schnitt durch einen schematisch dargestellten viskosen Dämpfer nach der Fig. 2, mit zusätzlichen, parallel verlaufenden Federn.

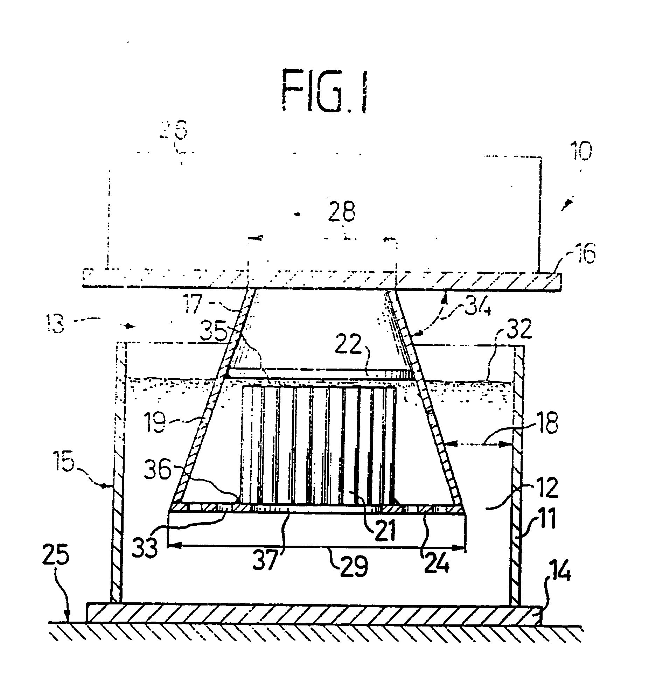

Der in den Figuren 1 bis 3 dargestellte Dämpfer 10 besteht im wesentlichen aus einem Dämpfergehäuse 11, in dem sich ein Dämpfermedium 12 befindet, und einem Dämpferstempel 13, der in dem Dämpfermedium 12 auf- und abfahrbar ist.

Das Dämpfergehäuse 11 besteht aus einem Gehäusemantel 15, der vorzugsweise als ein kreisrunder, in Einbaulage oben offener Hohlzylinder ausgebildet ist. An seiner, dem Dämpferstempel 13 abgewandten Unterseite ist das Dämpfergehäuse 11 mit einer Unterplatte 14 mediumdicht verschlossen. Mit der Unterplatte 14 steht der Dämpfer 10 auf seinem Bestimmungsort 25.

Der Dämpferstempel 13 besteht aus einer Oberplatte 16 zur Aufnahme eines schwingend zu lagernden Objektes 26 und einem durchgehend konischen Stempelrohr 17, das mit seinem großen Durchmesser 29 in das Dämpfermedium 12 eingetaucht ist. Das Stempelrohr 17 ist innen hohl und in Einbaulage unten offen. In seiner unterhalb der Oberfläche 32 des Dämpfermediums 12 liegenden Mantelfläche sind eine Vielzahl von als Drosseln wirkende Umlaufbohrungen 19 in dem Stempelrohr 17 vorgesehen. Durch die Konizität des Stempelrohrs 17 tritt das Dämpfermedium 12 beim Eintauchen des Stempelrohres 17 im Zwangsumlauf aus dem Stempelhohlraum 27 nach außen in den Ringspalt 18 zwischen dem Stempelrohr 17 und dem Dämpfergehäuse 11, wodurch eine zusätzliche Dampfung erzielt wird.

Der vertikale Abstand 30 zwischen den Umlaufbohrungen 19 und der Oberfläche 32 des Dampfmediums 12 ist größer als die größte zu erwartende und konstruktiv mögliche Schwingungsamplitude, wodurch ein Einarbeiten von Luft in das Dampfermedium 12 vermieden wird.

Der zwischen der Innenwandung des Gehäusemantels 15 und der Außenwandung des Stempelrohrs 17 bestehende Ringspalt 18, ist im Senkrechtschnitt keilförmig. Beim Eintauchen des Dämpferstempels 13, also in Druckrichtung, bewirkt dieser Ringspalt 18 eine größere Verdrängung von Dämpermedium 12, als es bei bekannten zylindrischen Stempelrohren und bei vergleichbaren Volumenverhältnissen der Fall ist Dadurch werden die Dämpfkraft in Druckrichtung erhöht und die Schwingungsamplituden verringert. Ferner bewirkt er - zusammen mit den Umlaufbohrungen 19 - einen gezielten Zwangsumlauf von Dämpfermedium 12 während der Schwingbewegungen. Dadurch wird ein selbsttätiges Auspumpen des Dämpfermediums 12 aus dem Dämpfergehäuses 11 verhindert und es können sehr hohe Dämpfungskräfte über lange Zeit und bei hoher Schwingungsbelastung aufgenommen werden.

Das konisch ausgebildete Stempelrohr 17 ist mit seinem kleinere Konusdurchmesser 28 mit der Oberplatte 16 verbunden, während sich der große Konusdurchmesser 29 in dem Dampfermedium 12 befindet. Der Konuswinkel 34 beträgt 50 bis 70 Grad, vorzugsweise beträgt er 60 Grad. Durch diese Konizität wird die Druckkomponente im Dämpfermedium 12 erhöht und die Versagungsgrenze zu größeren Druckkraften hin verschoben.

Bei der in der Fig. 1 dargestellten Ausführungsform ist in dem großen Konusdurchmesser 29 eine Prallplatte 24 angeordnet Die Prallplatte 24 ist mit einer zentrischen großen Durchtrittsöffnung 37 und mit einer Vielzahl, auf ihrem Umfang verteilten peripheren kleinen Durchtrittsöffnungen 33 versehen. In diesen Öffnungen 33 und 37 entsteht eine weitere Scherung und damit eine zusätzliche Dämpfungskraft.

In dem Stempelhohlraum 27 ist etwa in Höhe der Oberfläche 32 des Dämpfermediums 12 in Ruhestellung ein Abschlußblech 22 angeordnet mit dem ein Aufsteigen des Dämpfermediums 12 verhindert wird.

Auf der Prallplatte 24 sind eine Vielzahl von Innenrohren 21 angeordnet, die in den Stempelhohlraum 27 ragen. Die Innenrohre 21 sind zu einem Rohrpaket 38 zusammengeschweißt und im Bereich der zentrischen Durchtrittsoffnung 37 mit einer Schweißnaht 36 mit der Prallplatte 24 verschweißt. Gegenüber dem Abschlußblech 22 liegt das Rohrpaket 38 mit einem durchgehenden Abstand 35 frei. Diese Innenrohre 21 erhöhen die Dämpfkraft abermals.

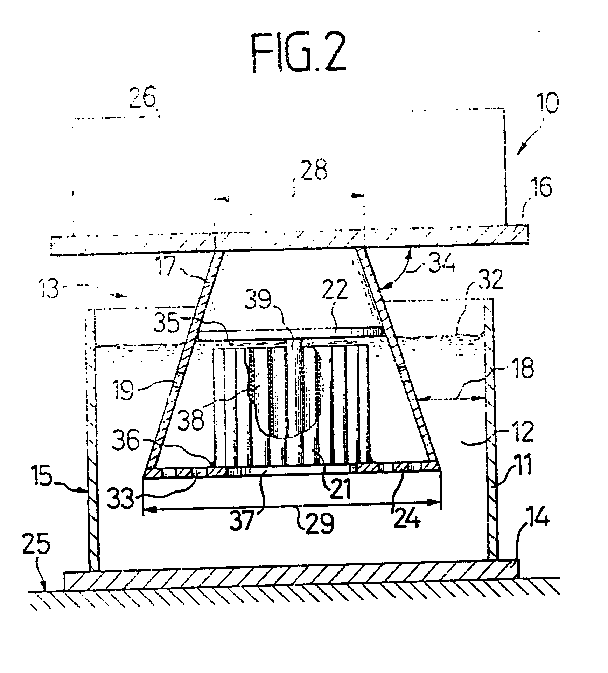

Bei der in der Fig 2 dargestellten Ausführungsform ist dem Rohrpaket 38 eine zentrisch durchgehende Abstützung 39 aus einem Vollmaterial zugeordnet. Diese Abstützung 39 ist mit den ihr benachbarten Innenrohren 21 und mit dem Abschlußblech 22 verschweißt, die übrigen Innenrohre 21 des Rohrpakets 38 liegen dabei mit dem Abstand 35 gegenüber dem Abschlußblech 22 frei.

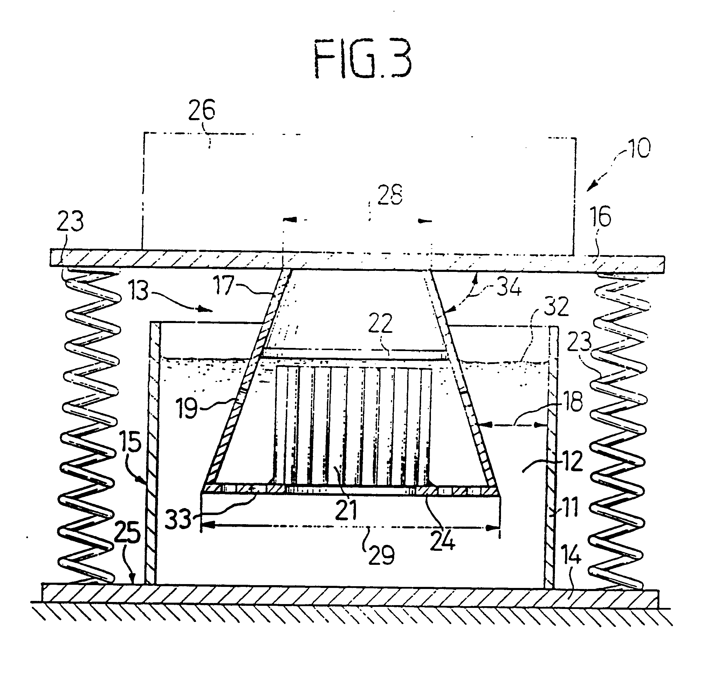

Bei der in der Fig 3 dargestellten Ausführungsform sind parallel zu dem Dämpfergehäuse 11 Federn 23 zwischen der Unterplatte 14 und der Oberplatte 16 angeordnet. Bei einem solchen Federkörper mit eingebautem Dämpfer 10 wird zur Schwingungsisolierung notwendige Lagerungselastizität durch diese Federn 23 erreicht, die hier beispielhaft als Schraubendruckfedern ausgebildet sind. Die Federn 23 verlaufen außerhalb des Dämpfergehäuses 11 und tragen das schwingende Objekt 26. Dabei dienen die Oberplatte 16 und die Unterplatte 14 zugleich als Federaufstandsfläche.

Durch alle diese Maßnahmen wird ein kompaktes Bauteil zur Schwingungsisolierung geschaffen, das eine hohe Dämpfung in Druckrichtung, große ertragbare Schwingwege - in horizontaler und in vertikaler Richtung - und eine Verbesserung der Standzeiten aufweist. Um zu vermeiden, daß in dem Stempelhohlraum 27 ein federndes Luftvolumen eingeschlossen wird, können in dem Stempelrohr 17 Luftausgleichsbohrungen vorgesehen sein. Dabei sollte der vertikale Abstand zur Oberfläche 32 des Dämpfermediums 12 größer als die größte zu erwartende Schwingungsamplitude.

## Patentansprüche

1. Schwingungsdämpfer (10) für elastisch aufgestellte Objekte (26), mit einem zumindest teilweise mit einem viskosen Dämpfermedium (12) gefüllten, in Einbaulage oben offenen Dämpfergehäuse (11), mit einem in Einbaulage unten offenen, durchgehend konisch ausgebildeten, hohlen Stempelrohr (17), das in dem Dämpfermedium (12) auf- und abfahrbar ist und mit einer, mit dem Stempelrohr (17) verbundenen Oberplatte (16) zur Aufnahme des Objekts (26), wobei das Stempelrohr (17) mit seinem kleinen Durchmesser (28) mit der Oberplatte (16) verbunden und mit seinem großen Durchmesser (29) in das Dämpfermedium (12) eingetaucht ist, dadurch gekennzeichnet, daß das Innere des Stempelrohrs (17) durch ein Abschlußblech (22) in zwei Kammern unterteilt ist, daß in dem untenliegenden großen Durchmesser (29) des Stempelrohrs (17) eine mit Durchtrittöffnungen (33) versehene Prallplatte (24) angeordnet ist, die eine Mehrzahl von in das Stempelrohr (17) hineinragenden Innenrohren (21) trägt, wobei die oberen Enden der Innenrohre (21) einen Abstand (35) zum Abschlußblech (22) aufweisen, und das Stempelrohr (17) in seiner unterhalb des Abschlußbleches (22) liegenden Mantelfläche eine Vielzahl von Umlaufbohrungen (19) aufweist.

2 Schwingungsdämpfer nach Anspruch 1 dadurch gekennzeichnet, daß das Abschlußblech (22) etwa im Bereich der Oberfläche (32) des Dämpfermediums (12) in Ruhestellung in dem Stempelrohr (17) angeordnet ist

3 Schwingungsdämpfer nach den Ansprüchen 1 und 2, dadurch gekennzeichnet, daß die Innenrohre (21) zu einem Rohrpaket (38) zusammengefügt sind.

4. Schwingungsdämpfer nach den Ansprüchen 1 bis 3, dadurch gekennzeichnet, daß das Rohrpaket (38) fest mit einer durchgehenden, mittigen Abstützung (39) verbunden ist, wobei die mittige Abstützung (39) mit dem Abschlußblech (22) verbunden ist.

5. Schwingungsdämpfer nach den Ansprüchen 1 bis 4, dadurch gekennzeichnet, daß der Konuswinkel (34) des Stempelrohrs (17) 50 bis 70 Grad, vorzugsweise 60 Grad beträgt.

6. Schwingungsdämpfer nach den Ansprüchen 1 bis 5, dadurch gekennzeichnet, daß die Oberplatte (16) und die Unterplatte (14) über außerhalb des Dämpfergehäuses (11) verlaufende Schraubendruckfedern (23) miteinander verbunden sind.

## Claims

1. Pulsation damper (10) for elastically disposed objects (26), including a damper housing which is at least partially filled with 3 viscose damping medium (12) and which is open at the top relative to its installation position; a hollow plunger pipe (17) which is open at the bottom relative to its installation position and continuously conically formed and which can be moved up and down into the damper medium (12), a top plate (16) linked with the plunger pipe (17), for receiving the object (26), in which respect the plunger pipe (17) is connected with the top plate (16) by its smaller diameter (28), and its larger diameter (29) is emersed into the damper medium (12) characterised in that the interior of the plunger pipe (17) is divided into two chambers by a sealing plate (22); that a buffer plate (24) including passages (33) is disposed in the larger diameter (29) at the bottom of the plunger pipe (17) which plate carries a plurality of interior pipes (21) which extend into the plunger pipe (17), the upper ends of the interior pipes (21) being at a distance (35) from the sealing plate (22), and the plunger pipe (17) has a plurality of peripheral bores (19) in the casing surface below the sealing plate (22)

2. Pulsation damper according to claim 1, characterised in that the sealing plate (22) is disposed in the plunger pipe (17) approximately in the region of the surface (32) of the damper medium (12) in the inactive state of the damper

3. Pulsation damper according to claims 1 and 2 characterised in that the interior pipes (21) are joined together to form a pipe package (38,

4 Pulsation damper according to claims 1 to 3 characterised in that the pipe package (38, is rigidly connected with a continuous central support (39) the central support (39) being connected with the sealing plate (22)

5 Pulsation damper according to claims 1 to 4 characterised in that the cone angle (34) of the plunger pipe (17) is 50 to 70 degrees, preferably 60 degrees.

6. Pulsation damper according to claims 1 to 5, characterised in that both the top plate (16) and the bottom plate (14) are linked via compressing springs (23) disposed outside the damper casing (11).

**Revendications**

1. Amortisseur d'oscillations (10) pour des objets (26) installés élastiquement, comprenant un carter d'amortisseur (11) ouvert vers le haut en position de montage et rempli au moins partiellement d'un milieu amortisseur visqueux (12), comprenant un tube-piston creux (17) qui est ouvert vers le bas en position de montage, qui est conformé en cône continu et qui peut être déplacé vers le haut et vers le bas dans le milieu amortisseur (12), et comprenant une plaque supérieure (16) reliée au tube-piston (17) pour recevoir l'objet (26), le tube-piston (17) étant relié à la plaque supérieure (16) par son petit diamètre (28) et plongé dans le milieu amortisseur (12) par son grand diamètre (29), caractérisé par le fait que l'intérieur du tube-piston (17) est divisé en deux chambres par une tôle de fermeture (22), par le fait qu'est disposée dans le grand diamètre inférieur (29) du tube-piston (17) une plaque d'impact (24) qui est munie d'ouvertures de passage (33) et qui porte une pluralité de tubes intérieurs (21) pénetrant dans le tube-piston (17), les extrémités supérieures des tubes intérieurs (21) présentant une distance (35) par rapport à la tôle de fermeture (22), et le tube-piston (17) présentant une pluralité de perçages répartis annulairement (19) dans sa surface latérale située au-dessous de la tôle de fermeture (22).

2. Amortisseur d'oscillations selon la revendication 1, caractérisé par le fait qu'en position de repos, la tôle de fermeture (22) est disposée dans la tube-piston (17) sensiblement dans la région de la surface (32) du milieu amortisseur (12).

3. Amortisseur d'oscillations selon les revendications 1 et 2, caractérisé par le fait que les tubes intérieurs (21) sont assemblés en un paquet de tubes (38).

4. Amortisseur d'oscillations selon les revendications 1 à 3, caractérisé par le fait que le paquet de tubes (38) est relié rigidement à un appui central d'un seul tenant (39), l'appui central (39) etant relié à la tôle de fermeture (22)

5. Amortisseur d'oscillations selon les revendications 1 a 4, caractérisé par le fait que l'angle (34) du cône du tube-piston (17) est de 50° à 70°, et de préférence de 60°

6. Amortisseur d'oscillations selon les revendications 1 à 5, caractérisé par le fait que la plaque supérieure (16) et la plaque inférieure (14) sont reliées entre elles par l'intermédiaire de ressorts de compression hélicoïdaux (23) s'étendant à l'extérieur du carter (11) de l'amortisseur.

# FIG.1

# FIG.2

# FIG.3